# EUROPEAN PATENT APPLICATION

(11) **EP 3 337 177 A1**
(43) Date of publication of application: **20.06.2018**
(21) Application number: 17207471.8
(22) Date of filing: 14.12.2017
(51) Int. Cl.: H04N 21/647, H04N 21/485

(54) **CONTROL DEVICE**

(30) Priority: 19.12.2016 JP 2016245070
(71) Applicant: Funai Electric Co., Ltd., Daito, Osaka, 574-0013 (JP)
(72) Inventor: ARASHI, Masahiko, Daito, Osaka 574-0013 (JP); SONODA, Yosuke, Daito, Osaka 574-0013 (JP); FUKUNAKA, Kenichi, Daito, Osaka 574-0013 (JP); TOJI, Shigeru, Daito, Osaka 574-0013 (JP); KAWAKITA, Mitsuru, Daito, Osaka 574-0013 (JP); SUZUKI, Takuya, Daito, Osaka 574-0013 (JP)
(74) Representative: Global IP Europe Patentanwaltskanzlei

(57) **Abstract**

A control device includes a communication component and a controller. The communication component is configured to transmit and receive control signal to and from an external device. The controller is configured to determine whether or not to output audio signal corresponding to control information included in the control signal based on attribute information included in the control signal.

## Description

This application claims priority to Japanese Patent Application No. 2016-245070 filed on December 19, 2016.

### BACKGROUND

### Field of the Invention

This invention generally relates to a control device.

### Background Information

The "Twenty-First Century Communications and Video Accessibility Act of 2010 (CVAA)" in the United States requires that when a text menu or other visual displayed on a screen is used to access functions installed in digital equipment, those functions be accompanied by audio output and the menu or visual display be accessible and usable by individuals who are blind or have impaired vision.

Therefore, implementation of a text-to-speech (TTS) function is required for digital equipment (such as television sets and digital video players/recorders). With this TTS function, for example, a digital device can output audio indicating power-on when the power of a television set is turned on by remote control. Also, when the channel is selected, audio indicating the selected channel number and/or the content of the program currently being broadcast on the channel can be outputted. On the other hand, JP 2011-151537 A discloses an information processing device with a plurality of HDMI connectors through which an audio signal is supplied to the other information processing device. With this information processing device, an audio signal supply destination can be selected.

### SUMMARY

It has been discovered that when a plurality of digital devices capable of audio output by TTS function are connected together, the audio outputs from a plurality of digital devices overlap.

One object is to provide a control device with which it is less likely that audio outputs from a plurality of digital devices will overlap when a plurality of digital devices capable of audio output by TTS function are connected together.
[1] In view of the state of the known technology and in accordance with an aspect of the present invention, a control device includes a communication component and a controller. The communication component is configured to transmit and receive control signal to and from an external device. The controller is configured to determine whether or not to output audio signal corresponding to control information included in the control signal based on attribute information included in the control signal.
   According to this aspect, it is possible to decide whether or not to output the audio signal corresponding to the control information included in the control signal based on the attribute information included in the control signal. Therefore, when the audio signal is not to be outputted from the external device, it can be decided to output the audio signal from the control device. Also, when the audio signal is to be outputted from the external device, it can be decided not to output the audio signal from the control device. That is, it is possible to output the audio signal corresponding to the control information from just the control device or the external device. This makes it possible to suppress duplication of the output of the audio signal. Thus, a control device can be provided that controls an output of the audio signal corresponding to a user operation signal in circumstances in which a plurality of devices are connected together.
[2] In accordance with a preferred embodiment according to the control device mentioned above, the controller is further configured to determine which of the control device and the external device outputs the audio signal based on the attribute information.
   In accordance with a preferred embodiment according to any one of the control devices mentioned above, the controller is further configured to determine which of the control device and the external device outputs the audio signal upon detecting a connection with the external device.
   In accordance with a preferred embodiment according to any one of the control devices mentioned above, the controller is further configured to determine which of the control device and the external device outputs the audio signal before outputting the audio signal corresponding to the control information.
[3] In accordance with a preferred embodiment according to any one of the control devices mentioned above, the attribute information includes priority of the external device.
   According to this aspect, it is possible to decide whether or not to output the audio signal based on the priority of the external device. Therefore, the audio signal can be outputted from a device that is best suited to outputting the audio signal by appropriately determining the priority.
   In accordance with a preferred embodiment according to any one of the control devices mentioned above, the controller is further configured to determine one of the control device and the external device that has higher priority than the other one of the control device and the external device as a device that outputs the audio signal.
[4] In accordance with a preferred embodiment according to any one of the control devices mentioned above, the control device is connected to the external device in accordance with HDMI (High-Definition Multimedia Interface) standard. The control signal is CEC (Consumer Electronics Control) signal.
   According to this aspect, the control device can be connected to the external device in accordance with the HDMI standard. Therefore, it is possible to suppress duplication of the output of the audio signal corresponding to the control information in the control device and the external device connected in accordance with the standard for the communication interface with which the video/audio is transmitted as a digital signal.
[5] In accordance with a preferred embodiment according to any one of the control devices mentioned above, the communication component is configured to transmit and receive the control signal having the attribute information which includes a logical address.
   According to this aspect, it is possible to decide whether or not to output the audio signal corresponding to the control information based on the logical addresses of the control device and the external device in the HDMI standard. Therefore, whether to output the audio signal can be easily decided by using existing information.
   In accordance with a preferred embodiment according to any one of the control devices mentioned above, the controller is further configured to determine one of the control device and the external device as a device that outputs the audio signal based on values of logical addresses of the control device and the external device.
[6] In accordance with a preferred embodiment according to any one of the control devices mentioned above, the communication component is configured to transmit and receive the control signal having the attribute information which includes a physical address.
   According to this aspect, it is possible to decide whether or not to output the audio signal corresponding to the control information based on the physical addresses of the control device and the external device in the HDMI standard. Therefore, whether to output the audio signal can be easily determined by using existing information.
   In accordance with a preferred embodiment according to any one of the control devices mentioned above, the controller is further configured to determine one of the control device and the external device as a device that outputs the audio signal based on values of physical addresses of the control device and the external device.
[7] In accordance with a preferred embodiment according to any one of the control devices mentioned above, the control device further includes a display controller and an input component. The display controller is configured to display on a screen a list of identification information about the control device and the external device. The input component is configured to accept a selection of identification information from the list of identification information displayed on the screen. The controller is further configured to determine whether or not to output the audio signal corresponding to the control information included in the control signal based on the attribute information and selected identification information.
   According to this aspect, it is possible to accept the selection of identification information from the list of identification information displayed on the screen. Therefore, it is possible to output the audio signal from a device suited to the user by accepting input from the user, for example.
[8] In accordance with a preferred embodiment according to any one of the control devices mentioned above, the communication component is configured to receive name information about the external device from the external device. The display controller is further configured to display on a screen a list of identification information about the external device including received name information.
   According to this aspect, since the identification information about the external device can include the name information about the external device, it is easier for the user to recognize the external device in the list of identification information. Also, erroneous selection of identification information is less likely to happen.
[9] In accordance with a preferred embodiment according to any one of the control devices mentioned above, the controller is further configured not to output the audio signal, and is configured to cause the external device to output the audio signal upon transmitting or receiving the control signal including the control information while the controller determines not to output the audio signal. The controller is further configured to output the audio signal, and is configured not to cause the external device to output the audio signal upon transmitting or receiving the control signal including the control information while the controller determines to output the audio signal. Thus, when it has been determined not to output the audio signal, if the control signal including the control information has been transmitted or received, then the controller does not output the audio signal, and causes the external device to output the audio signal. Also, when it has been determined to output the audio signal, if the control signal including the control information has been transmitted or received, then the controller outputs the audio signal, and does not cause the external device to output the audio signal.
   According to this aspect, when it has been determined to output the audio signal, the audio signal corresponding to the control information can be outputted from just the control device. Also, when it has been determined not to output the audio signal, the audio signal corresponding to the control information can be outputted from just the external device. Therefore, it is possible to stably suppress duplication in the output of the audio signal.
[10] In accordance with a preferred embodiment according to any one of the control devices mentioned above, the controller is further configured to transmit a prohibition signal for prohibiting an output of the audio signal by the external device to the external device via the communication component while the controller determines to output the audio signal.
   According to this aspect, when it has been determined to output the audio signal, the prohibition signal can be transmitted to the external device. Therefore, it is possible to reliably prohibit the output of the audio signal at the external device. Also, it is possible to stably suppress duplication in the output of the audio signal.
[11] In accordance with a preferred embodiment according to any one of the control devices mentioned above, the controller is further configured to transmit a permission signal for permitting an output of the audio signal by the external device to the external device via the communication component while the controller determines not to output the audio signal.
   According to this aspect, when it is determined not to output the audio signal, the permission signal can be transmitted to the external device. Therefore, when the audio signal is not outputted from the control device, the external device can be prompted to output the audio signal. Also, it will be less likely that no audio signal is outputted by either the control device or the external device.
[12] In accordance with a preferred embodiment according to any one of the control devices mentioned above, the communication component is configured to transmit and receive the control signal having the attribute information which includes information indicating whether to permit or prohibit an output of the audio signal by the control device.
   According to this aspect, the attribute information included in a second control signal received from the external device indicates whether to permit or prohibit the output of the audio signal, for example. Thus, the output of the audio signal by the control device can be controlled by the external device.
[13] In accordance with a preferred embodiment according to any one of the control devices mentioned above, the controller is further configured to determine whether or not the external device is capable of outputting the audio signal. The controller is further configured to determine which of the control device and the external device outputs the audio signal while the external device is capable of outputting the audio signal corresponding to the control information.
[14] In accordance with a preferred embodiment according to any one of the control devices mentioned above, the communication component is configured to transmit and receive the control signal including a first control signal that includes the attribute information, and a second control signal that includes the control information. The communication component is further configured to receive the first control signal from the external device, and is further configured to receive the second control signal from the external device or transmit the second control signal to the external device.
[15] In accordance with a preferred embodiment according to any one of the control devices mentioned above, the controller is further configured to control the control device based on the control information, and is further configured to output the audio signal corresponding to the control information.
   These comprehensive or specific aspects can be realized by a system, a method, an integrated circuit, a computer program, or a recording medium such as a computer-readable CD-ROM, or can be realized by any combination of a system, a method, an integrated circuit, a computer program, and a recording medium.
   With the control device of the present disclosure, duplication in the output of audio signals from a plurality of digital devices can be suppressed even when a plurality of digital devices that are capable of outputting an audio signal corresponding to control information are connected to each other.

### BRIEF DESCRIPTION OF THE DRAWINGS

Referring now to the attached drawings which form a part of this original disclosure:
FIG. 1 is a block diagram showing the functional configuration of a control system pertaining to first and third embodiments;
FIG. 2 is a sequence diagram showing a flow of messages when a permitted device is selected in the control system pertaining to the first embodiment;
FIG. 3 is a flowchart showing the selection of a permitted device in the control device pertaining to the first embodiment;
FIG. 4 is a sequence diagram showing the flow of messages when a control signal is transmitted in the control system pertaining to the first embodiment;
FIG. 5 is a block diagram showing the functional configuration of a control system pertaining to a second embodiment;
FIG. 6 is a sequence diagram showing the flow of messages when a permitted device is selected in the control system pertaining to the second embodiment;
FIGS. 7A, 7B and 7C are diagrams showing an example of a GUI for selecting a permitted device in the control system pertaining to the second embodiment; and
FIG. 8 is a sequence diagram showing the flow of messages when a permitted device is selected in the control system pertaining to the third embodiment.

### DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims.

### FIRST EMBODIMENT

### Overview of Control System

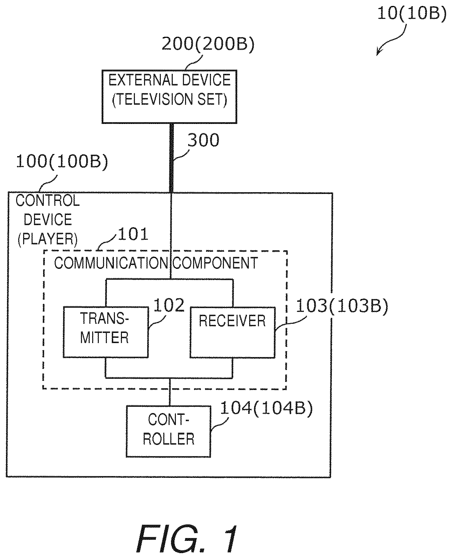

First, an overview of the control system pertaining to a first embodiment will be described in specific terms through reference to FIG. 1. FIG. 1 is a block diagram showing the functional configuration of a control system 10 pertaining to the first embodiment. The control system 10 comprises a control device 100 and an external device 200.

The control device 100 is a digital video player, for example. The external device 200 is a television set, for example. The control device 100 and the external device 200 are not limited to these devices. The control device 100 and the external device 200 can be any device so as long as they are a digital device.

In this embodiment, the control device 100 is connected to the external device 200 according to the HDMI (registered trademark) (High-Definition Multimedia Interface) standard. The HDMI standard is a standard specification for a communication interface for transmitting video and audio as a digital signal.

More specifically, the control device 100 and the external device 200 are connected together via an HDMI cable 300. The HDMI cable 300 is a cable conforming to the HDMI standard.

A physical address indicating a connection location is assigned to each of the devices (here, the control device 100 and the external device 200) connected by the HDMI cable 300. This physical address is a device identification number represented by a 16-bit numerical value divided into four parts each consisting of four bits.

In general, the connection configuration of an HDMI device is a tree structure having the root device at the top. Normally, a television set is the root device. In this case, a physical address is assigned according to the hierarchical distance from the root device. For instance, in the example in FIG. 1, a physical address of "0.0.0.0" is allocated to the external device 200 (the root device), and a physical address of "1.0.0.0" is allocated to the control device 100.

In the HDMI standard, CEC (Consumer Electronics Control) for linking among a plurality of HDMI devices is stipulated. According to CEC, control signals (CEC commands) are bidirectionally communicated among a plurality of HDMI devices. This communication is called CEC communication. This CEC communication makes it possible to perform the power-on and input switching of the external device 200 in conjunction with the power-on of the control device 100, for example. Also, the control device 100 can be operated with a remote control of the external device 200, for example.

This CEC communication is performed using a logical address for identifying the devices. A logical address is a 4-bit numerical value assigned according to the type of each device connected by HDMI. For example, "0" is assigned to a television set, "1" is assigned to a recording device, and "4" is assigned to a reproduction device.

A TTS function converts text into speech and outputs this audio. In particular, in the present disclosure, TTS function means an audio output function for supporting the operation of a digital device by a person who is blind or visually impaired. More specifically, TTS function means an output function of an audio signal corresponding to control information included in a control signal transmitted and received between a control device and an external device.

### Functional Configuration of Control System

Next, the functional configuration of the control device 100 included in the control system 10 will be described in specific terms through reference to FIG. 1.

The control device 100 is capable of transmitting a second control signal including control information for controlling the external device 200 to the external device 200. The control device 100 is also capable of outputting an audio signal corresponding to this control information. The control device 100 includes a communication component 101 (e.g., a transceiver) and a controller 104 (e.g., an electronic controller).

The communication component 101 is, for example, a CEC communication interface. The communication component 101 exchanges control signals with the external device 200. The communication component 101 includes a transmitter 102 and a receiver 103.

The transmitter 102 sends the external device 200 a second control signal including control information for controlling the external device 200. More specifically, the transmitter 102 uses CEC communication, for example, to transmit the second control signal to the external device 200.

The receiver 103 receives a first control signal including attribute information from the external device 200. The attribute information includes, for example, information indicating whether or not it is possible to output an audio signal corresponding to the control information and/or the priority of output of the audio signal. The Priority is a value used to select a permitted device (discussed below). Also, the priority is used for determining the order of priority of the devices that output audio signals corresponding to control information in a plurality of devices.

The receiver 103 also receives from the external device 200 a second control signal including control information for controlling the control device 100. The control information included in this second control signal is, for example, a remote control pass-through command of HDMI-CEC. More specifically, the control information includes, for example, a CEC command for turning the power supply on or off or a CEC command for starting or stopping the reproduction of video.

The controller 104 decides whether or not to output an audio signal corresponding to the control information included in the second control signal based on the attribute information included in the first control signal. For example, the controller 104 selects, from among the control device 100 and the external device 200, a permitted device that is permitted to output an audio signal corresponding to the control information, based on the priority of the control device 100 and the external device 200. In other words, the control device 100 decides which of the control device 100 and the external device 200 will permit an audio signal corresponding to the control information. Thus, in the illustrated embodiment, the controller 104 controls the control device 100 based on the control information, and outputs the audio signal corresponding to the control information.

Here, the audio signal corresponding to the control information is an audio signal (such as "power on" or "start playback") indicating the function of the control device 100 or the external device 200 executed based on the control information, or is an audio signal (such as "enter button" or "right button") indicating an input operation for generating control information in the control device 100 or the external device 200.

When the control device 100 is selected as the permitted device, the controller 104 sends the external device 200 a prohibition signal prohibiting the output of an audio signal corresponding to the control information, via the transmitter 102. Furthermore, when a second control signal is transmitted to the external device 200 or received from the external device 200, the controller 104 outputs an audio signal corresponding to the control information included in that second control signal. More specifically, the controller 104 converts text data corresponding to the control information into an electrical audio signal. Then, the controller 104 transmits that electrical audio signal to the external device 200 via the transmitter 102. Thus, in the illustrated embodiment, the controller 104 transmits the prohibition signal for prohibiting the output of the audio signal by the external device 200 to the external device 200 via the communication component 101 while the controller 104 determines to output the audio signal.

On the other hand, when the external device 200 is selected as the permitted device, the controller 104 sends the external device 200 a permission signal permitting the output of an audio signal corresponding to the control information, via the transmitter 102. Furthermore, when a second control signal is transmitted to the external device 200 or is received from the external device 200, the controller 104 does not output an audio signal corresponding to the control information included in the second control signal. Thus, in the illustrated embodiment, the controller 104 transmits the permission signal for permitting the output of the audio signal by the external device 200 to the external device 200 via the communication component 101 while the controller 104 determines not to output the audio signal.

Thus, in the illustrated embodiment, the controller 104 does not output the audio signal, and causes the external device 200 to output the audio signal upon transmitting or receiving the control signal including the control information while the controller 104 determines not to output the audio signal. Also, the controller 104 outputs the audio signal, and does not cause the external device 200 to output the audio signal upon transmitting or receiving the control signal including the control information while the controller 104 determines to output the audio signal.

When a second control signal is received from the external device 200, the controller 104 controls the control device 100 based on the control information included in the second control signal.

When a second control signal is received from the control device 100, the external device 200 operates based on the control information included in the second control signal. Furthermore, when an audio signal corresponding to the control information is received from the control device 100, the external device 200 outputs audio based on this audio signal.

### Operation of Control System

Next, the operation of the control system configured as above will be described. First, the operation of the control system when a permitted device that is permitted to output an audio signal corresponding to the control information has been selected will be described. The selection of the permitted device is performed, for example, when the control device 100 and the external device 200 change from a disconnected state to a connected state. More specifically, when the control device 100 detects a connection with the external device 200 by means of an HPD (hot plug detect) function, the following processing is executed. Thus, in the illustrated embodiment, the controller 104 determines which of the control device 100 and the external device 200 outputs the audio signal upon detecting the connection with the external device 200.

The selection of a permitted device is not limited to this. For example, the selection of the permitted device can be repeated periodically. That is, the selection of the permitted device can be performed before the output of the audio signal corresponding to the control information. Thus, in the illustrated embodiment, the controller 104 can determine which of the control device 100 and the external device 200 outputs the audio signal before outputting the audio signal corresponding to the control information.

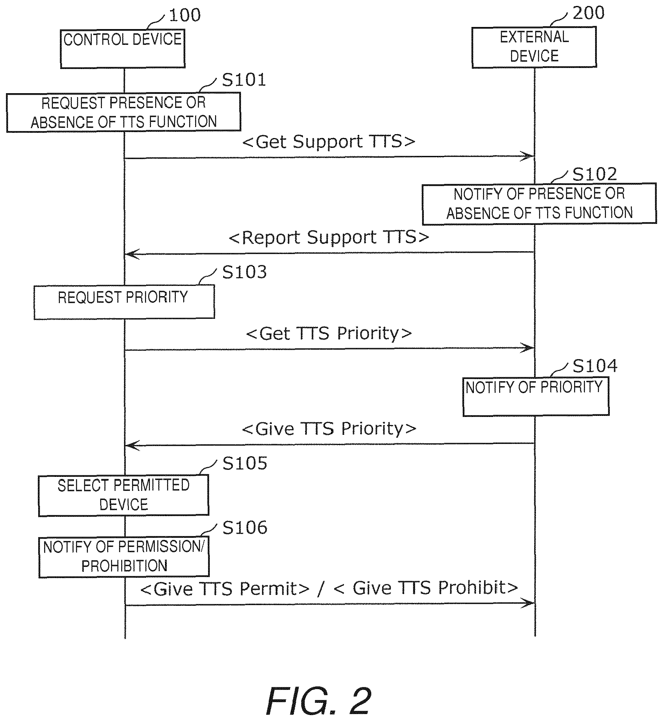

FIG. 2 is a sequence diagram showing the flow of messages when selecting a permitted device in the control system 10 pertaining to the first embodiment.

First, the control device 100 requests the external device 200 to transmit a control signal indicating the presence or absence of a TTS function (S101). That is, the controller 104 requests the external device 200 to transmit a control signal indicating whether or not it is possible to output an audio signal corresponding to the control information, via the transmitter 102. More specifically, the transmitter 102 transmits a <Get Support TTS> command, which is a new CEC command.

The external device 200 notifies the control device 100 of the presence or absence of a TTS function (S102). In FIG. 2, the external device 200 transmits a <Report Support TTS> command, which is a new CEC command indicating that it has a TTS function.

The control device 100 requests the external device 200 to transmit a first control signal including attribute information indicating the priority (S103). More specifically, the transmitter 102 transmits a <Get TTS Priority> command, which is a new CEC command.

The external device 200 notifies the control device 100 of the priority (S104). More specifically, the external device 200 transmits a <Give TTS Priority> command, which is a new CEC command. The <Give TTS Priority> command corresponds to a first control signal including attribute information indicating the priority.

The controller 104 compares the priority of the control device 100 with the priority of the external device 200 and selects either the control device 100 or the external device 200 as the permitted device (S105). For example, the controller 104 selects the device with the higher priority as the permitted device. Thus, in the illustrated embodiment, the controller 104 determines one of the control device 100 and the external device 200 that has higher priority than the other one of the control device 100 and the external device 200 as the permitted device (e.g., the device that outputs the audio signal).

Based on the selection result, the transmitter 102 sends the external device 200 a permission signal permitting the output of an audio signal corresponding to the control information, or a prohibition signal prohibiting the output of an audio signal corresponding to the control information (S106).

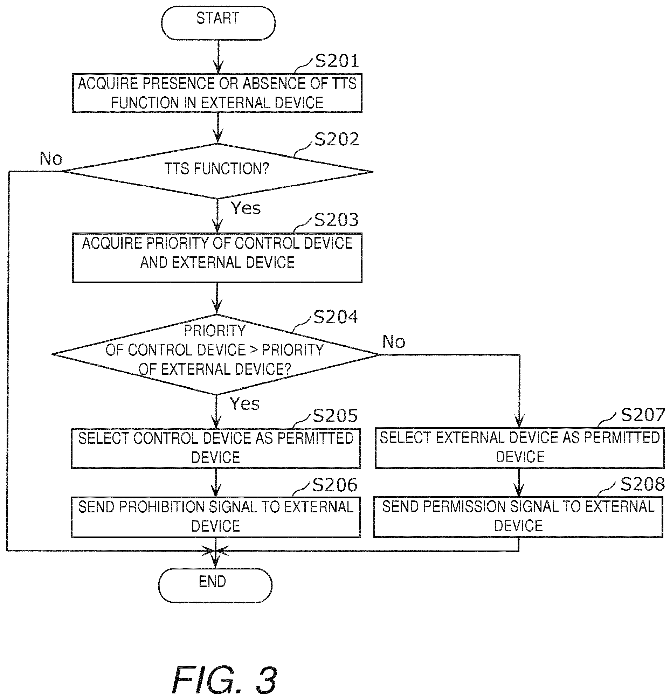

Details of the operation of the control device 100 in the selection of the permitted device will now be described. FIG. 3 is a flowchart showing the selection of the permitted device in the control device 100 pertaining to the first embodiment.

First, the control device 100 acquires information indicating the presence or absence of the TTS function of the external device 200 (S201). For example, the controller 104 receives a control signal indicating the presence or absence of the TTS function from the external device 200 via the communication component 101.

The controller 104 determines whether or not the external device 200 has the TTS function (S202). That is, the controller 104 determines whether or not the external device 200 can output an audio signal corresponding to the control information. If the external device 200 does not have a TTS function (No in S202), the process ends.

If the external device 200 does have a TTS function (Yes in S202), the control device 100 acquires the priority of the control device 100 and the external device 200 (S203). For example, the controller 104 reads the priority of the control device 100 from a memory (not shown). Then, the controller 104 further receives a CEC command indicating the priority from the external device 200 via the receiver 103.

The controller 104 compares the priority of the control device 100 with the priority of the external device 200 (S204). Here, if the priority of the control device 100 is higher than the priority of the external device 200 (Yes in S204), the controller 104 selects the control device 100 as the permitted device (S205). That is, the controller 104 decides to output an audio signal corresponding to the control information. Then, the controller 104 sends the external device 200 a prohibition signal for prohibiting the output of an audio signal by the TTS function via the transmitter 102 (S 206), and ends the processing. When a control signal is received after a prohibition signal has been received, the external device 200 does not output an audio signal corresponding to the control information.

On the other hand, if the priority of the control device 100 is equal to or lower than the priority of the external device 200 (No in S204), the controller 104 selects the external device 200 as the permitted device (S207). That is, the controller 104 decides not to output an audio signal corresponding to the control information. Then, the controller 104 sends the external device 200 a permission signal permitting the output of an audio signal by the TTS function, via the transmitter 102 (S208), and ends the processing. When a second control signal is received or transmitted after a permission signal has been received, the external device 200 outputs an audio signal corresponding to the control information.

Next, the operation of the control system 10 when a second control signal is transmitted from the external device 200 to the control device 100 after a permitted device has been selected as above will be described.

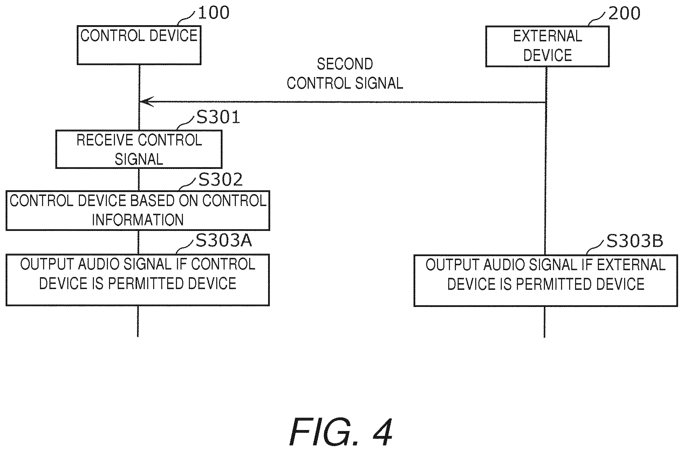

FIG. 4 is a sequence diagram showing the flow of messages when a second control signal is transmitted in the control system 10 pertaining to the first embodiment.

The receiver 103 receives from the external device 200 a second control signal including control information for controlling the control device 100 (S301). This second control signal is transmitted, for example, based on remote control operation of the external device 200. More specifically, for example, when the user operates the remote control of the external device 200 to start reproduction at the control device 100, a second control signal including control information for starting reproduction is transmitted.

The controller 104 controls the control device 100 based on the control information included in the received second control signal (S302). For example, the controller 104 starts reproducing video based on the control information.

Here, if the control device 100 is selected as the permitted device, the controller 104 outputs an audio signal corresponding to the control information (S303A). At this time, since the external device 200 is not selected as the permitted device, it does not output an audio signal corresponding to the control information. More specifically, when the control information indicates the start of reproduction, for example, only the control device 100 (out of the control device 100 and the external device 200) outputs a "start reproduction" signal, which is an audio signal corresponding to the control information. Thus, in the illustrated embodiment, the controller 104 controls the control device 100 based on the control information, and outputs the audio signal corresponding to the control information.

On the other hand, if the external device 200 is selected as the permitted device, the external device 200 outputs an audio signal corresponding to the control information (S303B). At this time, the control device 100 does not output an audio signal corresponding to the control information because it has not been selected as the permitted device. More specifically, when the control information indicates the start of reproduction, for example, "start reproduction," which is an audio signal corresponding to the control information, is outputted by just the external device 200 (out of the control device 100 and the external device 200).

### Effect

As discussed above, with the control system 10 of this embodiment, the control device 100 can decide whether or not to output an audio signal corresponding to the control information included in the second control signal, based on attribute information included in the first control signal. Therefore, it can be decided to output an audio signal from the control device 100 when no audio signal is outputted from the external device 200. Also, it can be decided not to output an audio signal from the control device 100 when an audio signal is outputted from the external device 200. That is, it is possible to output audio signals corresponding to the control information of only one of the control device 100 and the external device 200, making it possible to suppress duplication in the output of the audio signal.

Also, with the control system 10 of this embodiment, it is possible to decide whether to output an audio signal based on the priority of the external device 200. Therefore, an audio signal can be outputted from the device best suited to the output of an audio signal by appropriately establishing the priority.

Also, with the control system 10 of this embodiment, the control device 100 can be connected to the external device 200 in accordance with the HDMI standard. Therefore, it is possible to suppress duplication in the output of an audio signal corresponding to the control information in the control device 100 and the external device 200 that are connected according to a communication interface standard for transmitting video and audio as digital signals.

Also, with the control system 10 of this embodiment, when the control device 100 is selected as the permitted device, that is, when the controller 104 decides to output an audio signal, a prohibition signal can be transmitted to the external device 200. Therefore, it is possible to reliably prohibit the output of an audio signal at the external device 200, and duplication of the output of an audio signal can be stably suppressed.

Also, with the control system 10 of this embodiment, when the external device 200 is selected as the permitted device, that is, when the controller 104 decides not to output an audio signal, a permission signal can be transmitted to the external device 200. Therefore, it is possible to prompt the output of an audio signal to the external device 200 when no audio signal is outputted from the control device 100. Thus, it will be less likely that there will be no output of an audio signal from either the control device 100 or the external device 200.

Also, with the control system 10 of this embodiment, attribute information indicating whether or not it is possible to output an audio signal corresponding to the control information can be received from the external device 200. Therefore, when it can be reliably determined that the output of an audio signal corresponding to the control information is possible in both the control device 100 and the external device 200, the duplication of audio output can be stably suppressed.

### Modification Example 1 of First Embodiment

In the first embodiment above, a new CEC command (in FIG. 2, <Get TTS Priority> command and a <Give TTS Priority> command) are used by the control device 100 in order to acquire the priority. However, the priority does not necessarily have to be acquired using a command such as this.

For example, the control device 100 can decide whether or not to output an audio signal corresponding to the control information based on the logical addresses of the control device 100 and the external device 200. For example, the controller 104 can decide to output an audio signal corresponding to the control information when the logical address of the control device 100 is smaller than the logical address of the external device 200. Also, the controller 104 conversely can decide to output an audio signal corresponding to the control information when the logical address of the control device 100 is greater than the logical address of the external device 200. Thus, in the illustrated embodiment, the controller 104 determines one of the control device 100 and the external device 200 as the permitted device (e.g., the device that outputs the audio signal) based on the values of the logical addresses of the control device 100 and the external device 200. Specifically, in the illustrated embodiment, the controller 104 can determine one of the control device 100 and the external device 200 that has a smaller logical address than the other one of the control device 100 and the external device 200 as the permitted device. Alternatively, in the illustrated embodiment, the controller 104 can determine one of the control device 100 and the external device 200 that has a greater logical address than the other one of the control device 100 and the external device 200 as the permitted device.

In the HDMI standard, the logical address is a four-bit numerical value assigned according to the type of each HDMI-connected as discussed above. The acquisition of logical addresses of the control device 100 and the external device 200 can be performed according to the HDMI standard, so this will not be described in detail herein.

According to this Modification Example 1, the control device 100 can decide whether or not to output an audio signal corresponding to the control information based on the logical addresses of the control device 100 and the external device 200 in the HDMI standard. Therefore, whether or not to output an audio signal can be easily decided by using existing information. Thus, in the illustrated embodiment, the controller 104 determines one of the control device 100 and the external device 200 as the permitted device (e.g., the device that outputs the audio signal) based on the values of the physical addresses of the control device 100 and the external device 200. Specifically, in the illustrated embodiment, the controller 104 can determine one of the control device 100 and the external device 200 that has a smaller physical address than the other one of the control device 100 and the external device 200 as the permitted device. Alternatively, in the illustrated embodiment, the controller 104 can determine one of the control device 100 and the external device 200 that has a greater physical address than the other one of the control device 100 and the external device 200 as the permitted device.

### Modification Example 2 of First Embodiment

Also, the control device 100 can decide whether or not to output an audio signal corresponding to the control information based on the physical addresses of the control device 100 and the external device 200. For example, the controller 104 can decide to output an audio signal corresponding to the control information if the physical address of the control device 100 is smaller than the physical address of the external device 200. Also, the controller 104 conversely can decide to output an audio signal corresponding to the control information if the physical address of the control device 100 is greater than the physical address of the external device 200.

In the HDMI standard, a physical address is a device identification number expressed by a 16-bit numerical value as mentioned above. The acquisition of the physical addresses of the control device 100 and the external device 200 can be performed according to the HDMI standard, so this will not be described in detail herein.

With this Modification Example 2, the control device 100 can decide whether or not to output an audio signal corresponding to the control information based on the physical addresses of the control device 100 and the external device 200 in the HDMI standard. Therefore, whether or not to output an audio signal can be easily decided by using existing information.

### SECOND EMBODIMENT

Next, a second embodiment will be described. What is different in this embodiment from the first embodiment is mainly that the selection of the permitted device is performed via a GUI (graphical user interface). The control system pertaining to this embodiment will now be described, focusing on the difference from the first embodiment.

### Functional Configuration of Control System

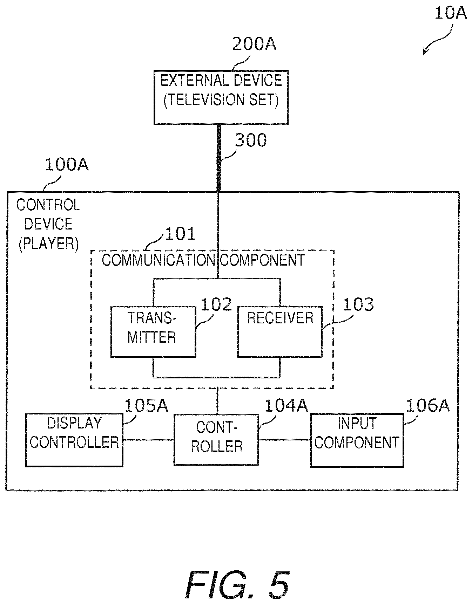

FIG. 5 is a block diagram showing the functional configuration of a control system 10A pertaining to the second embodiment. In FIG. 5, those constituent elements that are substantially the same as in FIG. 1 will be labeled the same, and will not be described again.

The control system 10A comprises a control device 100A and an external device 200A. The control device 100A is a digital video player, for example. The external device 200A is a television set, for example. The control device 100A is connected to the external device 200A through the HDMI cable 300.

The control device 100A is capable of sending the external device 200A a second control signal including control information for controlling the external device 200A. Also, the control device 100A is capable of outputting an audio signal corresponding to the control information. The control device 100A comprises a communication component 101 (including the transmitter 102 and the receiver 103), a controller 104A, a display controller 105A, and an input component 106A.

The display controller 105A displays on its screen a list of identification information about the control device 100A and the external device 200A. For example, the display controller 105A displays a list of identification information on a display (not shown) of the control device 100A. Also, for example, the display controller 105A can output an image signal indicating a list of identification information to the external device 200A via the HDMI cable 300.

This identification information is information for identifying the control device 100A and the external device 200A. More specifically, the names of the control device 100A and the external device 200A are used as identification information, for example.

The input component 106A accepts the selection of the identification information corresponding to the permitted device from the list of identification information displayed on the screen. The input component 106A is, for example, a remote control. The input component 106A accepts user input for selecting a permitted device from among a plurality of HDMI devices (here, the control device 100A and the external device 200A).

The controller 104A selects a permitted device based on the identification information accepted by the input component 106A. That is, the controller 104A decides whether or not to output an audio signal corresponding to the control information based on the HDMI device selected by the user through the GUI.

### Operation of Control System

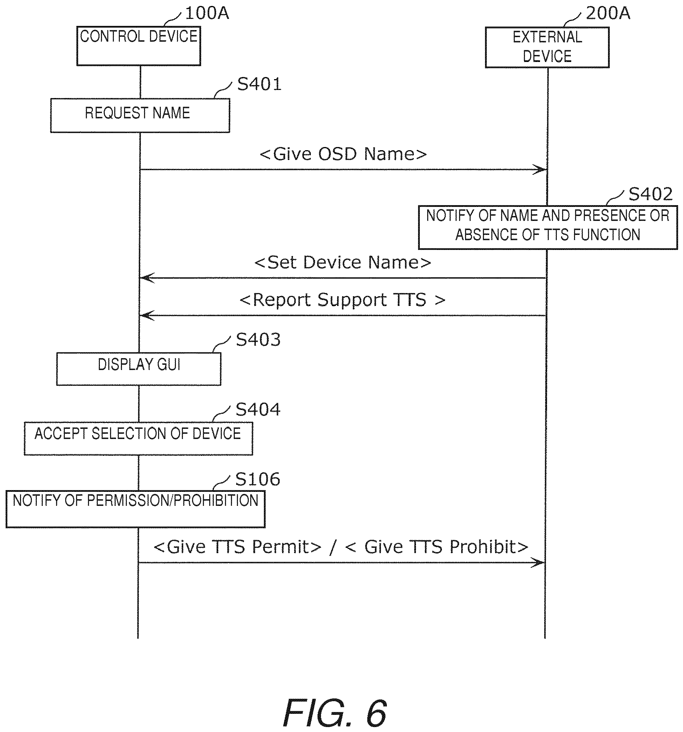

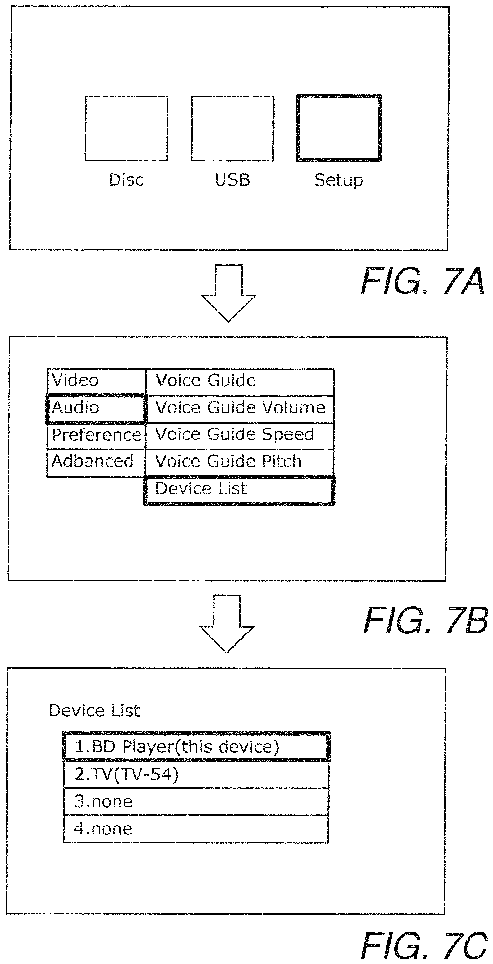

Next, the operation of the control system 10A configured as above will be described. FIG. 6 is a sequence diagram illustrating the flow of messages in selecting a permitted device in the control system 10A pertaining to the second embodiment. FIGS. 7A, 7B and 7C are diagrams showing an example of a GUI for selecting a permitted device in the control system 10A pertaining to the second embodiment. In FIG. 6, the processing that is substantially the same as in FIG. 2 will be labeled the same and will not be described again.

First, the control device 100A requests the name of the external device 200A from the external device 200A (S401). That is, the controller 104A sends the external device 200A a message requesting name information about the external device 200A, via the transmitter 102. More specifically, the transmitter 102 transmits a <Give OSD Name> command, which is an existing CEC command.

The external device 200A notifies the control device 100A of the presence or absence of a TTS function in the external device 200A (S402). More specifically, the external device 200A transmits a <Set Device Name> command, which is an existing CEC command including name information. Furthermore, the external device 200A transmits a <Report Support TTS> command, which is a new CEC command indicating that there is a TTS function.

The display controller 105A displays a GUI that includes a list of identification information about the control device 100A and the external device 200A (S403). Here, the identification information includes the name information received from the external device 200A. Then, the controller 104A accepts from the user the selection of the permitted device via the input component 106A (S404).

FIGS. 7A, 7B and 7C show the screen transition up to the GUI that includes the list of identification information. Selecting "Setup" on the screen in FIG. 7A changes the screen in FIG. 7A to the screen in FIG. 7B. Selecting "Audio" and "Device List" on the screen in FIG. 7B changes the screen in FIG. 7B to the screen in FIG. 7C.

FIG. 7C shows a GUI including a list of identification information about the control device 100A and the external device 200A. In FIG. 7C, the identification information about the control device 100A and the external device 200A includes "BD Player (this device)," which indicates the type and name of the control device 100A, and "TV (TV-54)," which indicates the type and name of the external device 200A.

The device corresponding to the identification information selected by the user is selected as the permitted device on the screen in FIG. 7C. For example, if "BD Player (this device)" is selected, then the control device 100A is selected as the permitted device, and if "TV (TV-54)" is selected, the external device 200A is selected as the permitted device.

Finally, the transmitter 102 sends the external device 200A permission signal for permitting the output of an audio signal corresponding to the control information, or a prohibition signal for prohibiting the output of an audio signal corresponding to the control information, based on the selection result (S106).

### Effect

As described above, with the control system 10A pertaining to this embodiment, the selection of identification information corresponding to a permitted device can be accepted from a list of identification information displayed on the screen. Therefore, it is possible to output an audio signal from the device best suited to the user by accepting input from the user, for example.

Also, with the control system 10A pertaining to this embodiment, identification information about the external device 200A can include name information about the external device 200A, making it easier for the user to recognize the external device 200A in a list of identification information, and erroneous selection of identification information is less likely to happen.

### THIRD EMBODIMENT

A third embodiment will now be described. This embodiment differs from the first and second embodiments above in that an inquiry about the permitted device is made from the control device to the external device. The control system pertaining to this embodiment will now be described, focusing on the differences from the first and second embodiments.

### Functional Configuration of Control System

As shown in FIG. 1, the control system 10B pertaining to this embodiment comprises a control device 100B and an external device 200B. The control device 100B is a digital video player, for example. The external device 200B is a television set, for example. The control device 100B is connected to the external device 200B via the HDMI cable 300.

The control device 100B is capable of sending the external device 200B a second control signal including control information for controlling the external device 200B. Also, the control device 100B is capable of outputting an audio signal corresponding to this control information. The control device 100B comprises the communication component 101 (including the transmitter 102 and a receiver 103B) and a controller 104B.

The receiver 103B receives from the external device 200B a first control signal including attribute information indicating whether or not the control device 100B is a permitted device. The first control signal is transmitted from the external device 200B in response to a request from the control device 100B, for example.

The controller 104B selects the permitted device from among the control device 100B and the external device 200B based on the first control signal received by the receiver 103B. That is, the controller 104B decides whether or not to output an audio signal corresponding to the control information.

### Operation of Control System

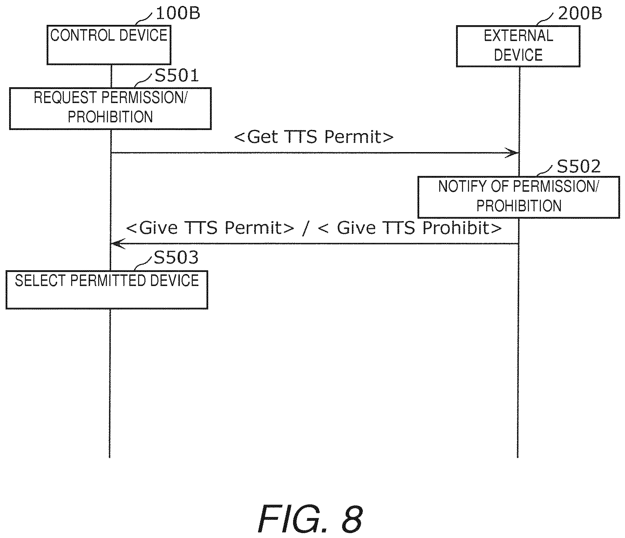

The operation of the control system 10B configured as above will now be described. FIG. 8 is a sequence diagram illustrating the flow of messages in selecting a permitted device in the control system 10B pertaining to the third embodiment.

First, the controller 104B asks the external device 200B for information indicating whether the output of an audio signal by TTS function is permitted or prohibited (S501). That is, the controller 104B requests, via the communication component 101, that the external device 200B transmit information indicating whether or not the output of an audio signal corresponding to the control information is permitted by the control device 100B. More specifically, the transmitter 102 transmits, a <Get TTS Permit> command, which is a new CEC command, for example.

The external device 200B selects the permitted device from among the control device 100B and the external device 200B. There are no particular restrictions on the how the selection is made. However, it is possible to use the selection method used with the control devices 100 and 100A pertaining to the first and second embodiments.

Then, the external device 200B sends the control device 100B a permission signal if the output of an audio signal at the control device 100B is permitted, and sends the control device 100B a prohibition signal if the output of an audio signal at the control device 100B is prohibited (S502). More specifically, the external device 200B sends the control device 100B a <Give TTS Permit> command, which is a new CEC command signal, as a permission signal, for example. Or, the external device 200B sends the control device 100B a <Give TTS Prohibit> command, which is a new CEC command, as a prohibition signal, for example.

The controller 104B selects the permitted device based on the notification received from the external device 200B (S503). More specifically, the controller 104B decides to output an audio signal corresponding to the control information upon receiving the <Give TTS Permit> command. The controller 104B decides not to output an audio signal corresponding to the control information upon receiving the <Give TTS Prohibit> Command.

### Effect

As described above, with the control system 10B pertaining to this embodiment, a control signal indicating whether to permit or prohibit the output of an audio signal at the control device 100B can be received from the external device 200B, so the output of audio signals at the control device 100B can be controlled by the external device 200B. Thus, in the illustrated embodiment, the attribute information includes information indicating whether to permit or prohibit the output of the audio signal by the control device 100B.

Also, in the illustrated embodiment, the controller 104B determines whether or not the external device 200B is capable of outputting the audio signal. Also, the controller 104B determines which of the control device 100B and the external device 200B outputs the audio signal while the external device 200B is capable of outputting the audio signal corresponding to the control information.

### Other Embodiments

Embodiments of the control system pertaining to one or more aspects of the present invention are described above. However, the present invention is not limited to or by these embodiments. Without departing from the gist of the present invention, various modifications that would occur to those skilled in the art and that have been applied to these embodiments, as well as modes constructed by combining the constituent elements in different embodiments, can also be included within the scope of aspects of the present invention.

For example, in the above embodiments, the control device and the external device are connected by wire. However, the control device and the external device can instead be connected wirelessly.

In the above embodiments, the control device and the external device are connected in accordance with the HDMI standard. However, the control device and the external device can instead be connected according to some standard other than the HDMI standard. For example, the control device and the external device can be connected in accordance with DLNA (registered trademark) (Digital Living Network Alliance) guidelines, instead of the HDMI standard.

In the above embodiments, two devices, namely the control device and the external device, are connected. However, more than two devices can also be connected. The above-mentioned control of the output of an audio signal can also be applied when more than two devices are connected, and duplication of the output of audio signals can be suppressed.

In the above embodiments, a permission signal or a prohibition signal is transmitted based on the selection of a permitted device. However, these notifications need not be transmitted. For example, it is not necessary to send a notification if selection of the permitted device is performed by both the control device and the external device. Here again, just one permitted device will be selected so long as the same selection method is used by both the control device and the external device, so duplication of audio output can be suppressed.

The name information about the external device is used in the second embodiment above. However, the name information does not necessarily have to be used. For example, the name or number (such as HDMI-1) of the port to which the external device is connected can be used.

The control device asks the external device for its name in the second embodiment above. However, this is not the only option. For example, the name entered by the user via the GUI can be used.

Also, some or all of the constituent elements of the control device in the above embodiments can be formed by a single system LSI (large scale integrated circuit). For example, the control device 100 (100B) can be made up of a single system LSI having the communication component 101 and the controller 104 (104B). Also, the control device 100 (100B) can be made up of a plurality of system LSIs having the communication component 101 and the controller 104 (104B). Furthermore, the control device 100A can be made up of a single system LSI having the communication component 101, the controller 104A, the display controller 105A and the input component 106A. Also, the control device 100A can be made up of a plurality of system LSIs having the communication component 101, the controller 104A, the display controller 105A and the input component 106A.

A system LSI is a super multifunctional LSI manufactured by integrating a plurality of components on a single chip, and more specifically is a computer system including a microprocessor, a ROM (read-only memory), a RAM (random access memory), etc. Computer programs are stored in the ROM. The microprocessor operates in accordance with a computer program, allowing the system LSI to achieve its functions.

Although it is called a system LSI here, depending on the degree of integration, it can be called an IC, an LSI, a super LSI, or an ultra LSI. Also, the means for circuit integration is not limited to LSI, and can be realized by a dedicated circuit or a general-purpose processor. After LSI manufacture, an FPGA (field programmable gate array) that allows programming, or a reconfigurable processor that allows connections and settings of circuit cells in the LSI to be reconfigured, can be utilized.

Furthermore, if some technique for circuit integration that replaces LSI should appear through progress in semiconductor technology or some other derivative technique, it is of course conceivable that this technology can be used to carry out functional block integration. The application of biotechnology and so forth is also a possibility.

Modes of the present invention are not limited to just a control device such as this, and also include a control method in which the characteristic components included in the control device are converted into steps. Also, another mode of the present invention can be a computer program for causing a computer to execute the characteristic steps included in the control method. Another mode of the present invention can be a computer-readable non-transitory recording medium on which a computer program such as this is recorded.

In the above embodiments, the constituent elements can be constituted by dedicated hardware, or can be realized by executing a software program suitable for those constituent elements. The constituent elements can be realized by having a CPU, a processor, or another such program executing component read and execute a software program recorded to a recording medium such as a hard disk or a semiconductor memory. Here, the software for realizing the control device and so forth in the above embodiments is a program such as the following.

This program is used to execute a control method that includes a step of transmitting and receiving control signals to and from an external device, and a step of deciding whether or not to output an audio signal corresponding to control information included in the control signal, based on attribute information included in the control signal.

The control device pertaining to the present invention can be utilized in a digital video player or the like connected by HDMI cable to a television set.

The embodiments described above all represent comprehensive or specific examples. Numerical values, shapes, materials, constituent elements, layout positions and connection modes of constituent elements, steps, the order of steps, and so forth given in the above-mentioned embodiments are merely examples and are not intended to limit the scope of the claims. Also, among the constituent elements in the above-mentioned embodiments, those constituent elements not described in an independent claim showing the most significant concept are described as optional constituent elements.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims.

## Claims

1. A control device comprising:
a communication component configured to transmit and receive control signal to and from an external device; and
a controller configured to determine whether or not to output audio signal corresponding to control information included in the control signal based on attribute information included in the control signal.

2. The control device according to claim 1, wherein
the controller is further configured to determine which of the control device and the external device outputs the audio signal based on the attribute information.

3. The control device according to claim 1 or 2, wherein
the attribute information includes priority of the external device.

4. The control device according to any one of claims 1 to 3, wherein
the control device is connected to the external device in accordance with HDMI (High-Definition Multimedia Interface) standard, and
the control signal is CEC (Consumer Electronics Control) signal.

5. The control device according to any one of claims 1 to 4, wherein
the communication component is configured to transmit and receive the control signal having the attribute information which includes a logical address.

6. The control device according to any one of claims 1 to 4, wherein
the communication component is configured to transmit and receive the control signal having the attribute information which includes a physical address.

7. The control device according to any one of claims 1 to 6, further comprising
a display controller configured to display on a screen a list of identification information about the control device and the external device, and
an input component configured to accept a selection of identification information from the list of identification information displayed on the screen,
the controller being further configured to determine whether or not to output the audio signal corresponding to the control information included in the control signal based on the attribute information and selected identification information.

8. The control device according to claim 7, wherein
the communication component is configured to receive name information about the external device from the external device, and
the display controller is further configured to display on a screen a list of identification information about the external device including received name information.

9. The control device according to any one of claims 1 to 8, wherein
the controller is further configured not to output the audio signal, and is further configured to cause the external device to output the audio signal upon transmitting or receiving the control signal including the control information while the controller determines not to output the audio signal, and
the controller is further configured to output the audio signal, and is further configured not to cause the external device to output the audio signal upon transmitting or receiving the control signal including the control information while the controller determines to output the audio signal.

10. The control device according to any one of claims 1 to 9, wherein
the controller is further configured to transmit a prohibition signal for prohibiting an output of the audio signal by the external device to the external device via the communication component while the controller determines to output the audio signal.

11. The control device according to any one of claims 1 to 10, wherein
the controller is further configured to transmit a permission signal for permitting an output of the audio signal by the external device to the external device via the communication component while the controller determines not to output the audio signal.

12. The control device according to any one of claims 1 to 11, wherein
the communication component is configured to transmit and receive the control signal having the attribute information which includes information indicating whether to permit or prohibit an output of the audio signal by the control device.

13. The control device according to any one of claims 1 to 12, wherein
the controller is further configured to determine whether or not the external device is capable of outputting the audio signal, and
the controller is further configured to determine which of the control device and the external device outputs the audio signal while the external device is capable of outputting the audio signal corresponding to the control information.

14. The control device according to any one of claims 1 to 13, wherein
the communication component is configured to transmit and receive the control signal including:
a first control signal that includes the attribute information, and
a second control signal that includes the control information, and
the communication component is further configured to receive the first control signal from the external device, and is further configured to receive the second control signal from the external device or transmit the second control signal to the external device.

15. The control device according to any one of claims 1 to 14, wherein the controller is further configured to control the control device based on the control information, and is further configured to output the audio signal corresponding to the control information.
